# Europäisches Patentamt

# European Patent Office

# Office européen des brevets

(19)

(11) Veröffentlichungsnummer: **0 011 677**
**B1**

(12)

# EUROPÄISCHE PATENTSCHRIFT

(45) Veröffentlichungstag der Patentschrift:
06.10.82

(21) Anmeldenummer: **79102757.6**

(22) Anmeldetag: **01.08.79**

(51) Int. Cl.³: **H 04 N 9/09**

(54) Verfahren zum Konvergenzschnellabgleich für eine Farbfernsehkamera.

(30) Priorität: **02.12.78 DE 2852213**
**21.07.79 DE 2929690**

(43) Veröffentlichungstag der Anmeldung:
**11.06.80 Patentblatt 80/12**

(45) Bekanntmachung des Hinweises auf die Patenterteilung:
**06.10.82 Patentblatt 82/40**

(84) Benannte Vertragsstaaten:
**AT CH DE GB IT SE**

(56) Entgegenhaltungen:
**DE-A-1 941 237**
**DE-A-2 048 349**
**DE-A-2 057 540**
**FR-A-2 135 359**

(73) Patentinhaber: **GRUNDIG E.M.V. Elektro-Mechanische Versuchsanstalt Max Grundig, Kurgartenstrasse 37, D-8510 Fürth (DE)**

(72) Erfinder: **Rumland, Rainer, Irmgardstrasse 12, D-8501 Rosstal (DE)**

(74) Vertreter: **Voigt, Günter, Kurgartenstrasse 37, D-8510 Fürth (DE)**

BUNDESDRUCKEREI BERLIN

## Verfahren zum Konvergenzschnellabgleich für eine Farbfernsehkamera

Die Erfindung bezieht sich auf ein Verfahren zum Konvergenzschnellabgleich für eine Farbfernsehkamera gemäß Oberbegriff des Anspruchs 1.

Bekannte Verfahren zum Konvergenzabgleich benutzen als Kriterium für die Deckungsgleichheit vorzugsweise ein Testbild, welches einen steilen Schwarz-Weiß-Übergang im Fernsehbild darstellt. Dieser Schwarz-Weiß-Sprung erzeugt in den drei Bildaufnahmeröhren der Farbfernsehkamera und damit in den drei Farbkanälen einen entsprechenden Signalsprung, der als Kriterium für die Regelkreise zur gegenseitigen Verschiebung der Abtastraster herangezogen wird.

Das Signal für den Farbkanal Grün und damit das entsprechende Abtastraster stellt den Bezugswert für die beiden anderen Farbsignale (Farbkanäle Rot und Blau) und deren Abtastraster dar. Diese beiden Abtastraster werden durch je einen zugeordneten Regelkreis derart in ihrer Rasterlage verschoben, bis sich anhand des erzeugten Signalsprungs eine eindeutige Deckung ergibt.

Das so in einer Richtung, zum Beispiel der Horizontalrichtung, korrigierte Bild wird durch eine gleiche Anordnung, die in der anderen Vorzugsrichtung, zum Beispiel der Vertikalrichtung arbeitet, vollends optimiert.

Wichtig für die einwandfreie Funktion dieser bekannten Anordnungen ist die eindeutige Erzeugung des Sprungsignals, da zum Vergleich der Signale vorzugsweise die Sprungflanke benutzt wird. Hierzu wird im allgemeinen dieses Sprungsignal in ein digitales Signal umgewandelt und dann in dem nachfolgenden Regelkreis weiter verarbeitet.

Wird beispielsweise das Testbild unscharf aufgenommen, so kann dies durch das Verschleifen des Sprungsignals zu einem Fehlabgleich führen.

Aus der DE-A-2 057 540 ist ein Verfahren zum Nachweis des Deckungsfehlers zweier Fernsehaufnahmeröhren oder einer Fernsehkamera mit mindestens **zwei** Fernsehaufnahmeröhren bekannt, bei dem das Kriterium für das Vorhandensein von optimaler Konvergenz durch ein Hauptminimum des Energieinhalts der Farbdifferenzsignale gegeben ist. Dieses Verfahren arbeitet auch ohne ein spezielles Testbild. Es kann eine normale Szene abgetastet werden. Voraussetzung ist jedoch, daß die Nebenminima einen Abstand vom Hauptminimum haben, der größer ist als der Bereich der geforderten Fehleranzeige. Das heißt, bei einem beliebigen Bildinhalt muß zunächst der Abstand von Haupt- und Nebenminima ermittelt werden, um so festzustellen, ob ein einwandfreies Arbeiten des Verfahrens gewährleistet ist.

Der Erfindung liegt die Aufgabe zugrunde, ein Verfahren zum Konvergenzschnellabgleich für Farbfernsehkameras zu schaffen, bei dem völlig unabhängig vom jeweiligen Bildinhalt ein einwandfreier Konvergenzabgleich gewährleistet ist.

Diese Aufgabe wird erfindungsgemäß durch die im kennzeichnenden Teil des Anspruchs 1 angegebenen Maßnahmen gelöst.

Vorteilhafte Weiterbildungen ergeben sich aus den Unteransprüchen.

Ein Ausführungsbeispiel der Erfindung ist in der Zeichnung dargestellt und wird im folgenden näher beschrieben. Es zeigt

Fig. 1 die prinzipielle Darstellung der Abweichung der Raster zweier verschiedener Farbkanäle und

Fig. 2 ein schematisches Funktionsschaltbild einer elektronischen Steuerschaltung zur Durchführung des erfindungsgemäßen Verfahrens zum automatischen Konvergenzabgleich.

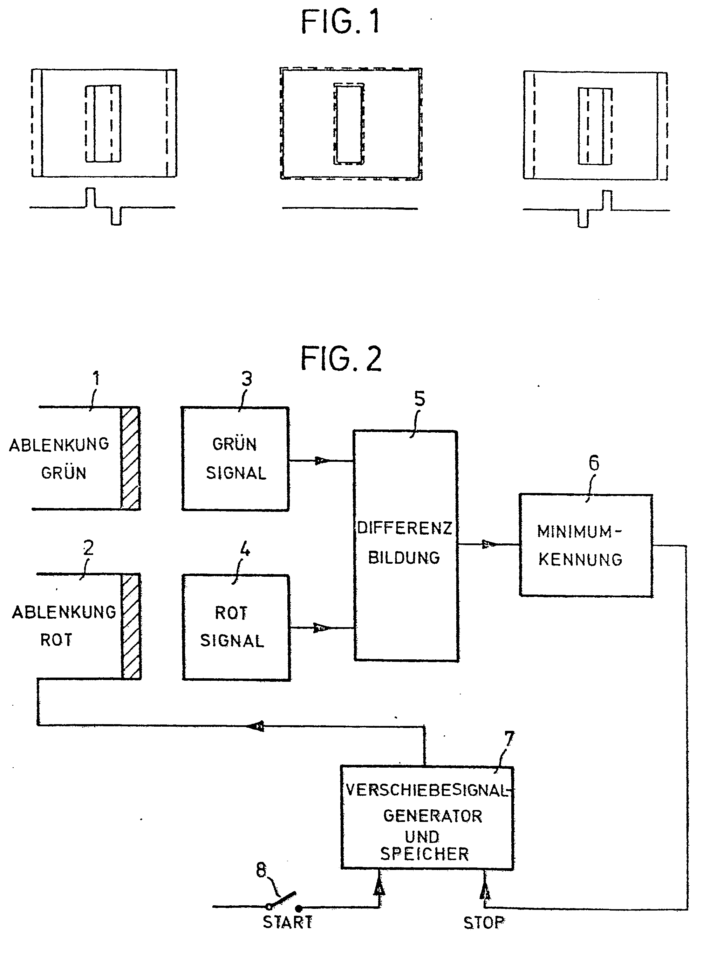

Gemäß Fig. 1, welche die Abweichung der Raster zweier verschiedener Farbkanäle darstellt, wird zum einfacheren Verständnis von der nicht dargestellten Kamera eine Bildvorlage aufgenommen, welche einen schwarzen Balken auf einem weißen Untergrund darstellt. Dabei ist beispielsweise die Lage des Rasters der Bildaufnahmeröhre für den Kanal Grün mit durchgezogener Linie und die Lage des Rasters der Bildaufnahmeröhre für den Kanal Rot mit gestrichelter Linie dargestellt. Subtrahiert man das eine Signal vom anderen, so erhält man das unter den in der Fig. 1 dargestellten Rastern angegebene zusätzliche Signal. Sind beide Raster deckungsgleich, so wird das Signal zu Null. Bei einer Rasterverschiebung in der Gegenrichtung nimmt das Signal wieder zu. Eine einwandfreie Konvergenz tritt demnach stets dann auf, wenn der Energieinhalt des Differenzsignals ein Minimum wird. Dies gilt in horizontaler ebenso wie in vertikaler Richtung, für schwarz/weiße ebenso wie für farbige Bildvorlagen, für Halbtonbilder ebenso wie für extrem kontrastreiche Bilder.

Es hat sich gezeigt, daß jede Abweichung bzw. Ablage der Raster zusätzliche Signale erzeugt, die als störende Farbsäume im Bild auftreten und bekannt sind. Sind die Störsignale durch Optimierung der Rasterlage beseitigt, ist auch der Energieinhalt der Differenzsignale ein Minumum.

Das in einer Teilschaltung der nachfolgend noch beschriebenen Automatik abgeleitete Minimumsignal kann in einfacher Weise einer Anzeigeeinheit (Indikator), für welche beispielsweise ein Meßinstrument vorgesehen sein kann, zugeführt werden; auch LED-Indikatoren oder ein Bildschirm eines Suchermonitors sind möglich. Bei einem vereinfachten, manuellen Konzept für den Konvergenzschnellabgleich kann auf die normalen, in der Farbfernsehkamera bereits vorhandenen Einstellregister für die H- und V-Lage zurückgegriffen werden.

Der Abgleich erfolgt dann in der Weise, daß die vier Lageregler (für Blau H- und V-Lage und Rot H- und V-Lage) von Hand nacheinander derart betätigt werden, daß sich auf dem Anzeigeinstrument jeweils ein Minimum der Anzeige ergibt.

Ein Ausführungsbeispiel für eine atuomatische elektronische Steuerschaltung ist schematisch als Funktionsschaltbild in F i g. 2 dargestellt. Die Zusammenhänge werden anhand eines Grün- und Rot-Kanals einer Farbkamera im folgenden näher erläutert. Aus den in den jeweiligen Ablenkeinheiten 1, 2 bzw. Bildaufnahmeröhren der Farbfernsehkamera erzeugten Farbsignalen für die Farbkanäle Grün und Rot wird in einer Einheit für Differenzbildung ein Differenzsignal gewonnen, welches seinerseits einer Minimum-Kennschaltung 6 zugeführt wird. Startet man den Abgleich durch eine Starttaste 8, so läuft das Rot-Raster, gesteuert durch einen Verschiebesignalgenerator und Speicher 7, zunächst in eine der seitlichen Endlagen und wird anschließend mit gleichbleibender Geschwindigkeit über den gesamten Bereich in der Gegenrichtung verschoben, wobei das Hauptminimum ermittelt wird.

Sobald der erste Durchlauf beendet ist, beginnt der zweite. Dabei wird dann das Hauptminimum angefahren. Dies geschieht über ein Stop-Signal am Ausgang der Minimum-Kennschaltung. Damit ist die Lage des Rot-Rasters für beliebig lange Zeit fixiert. Bei diesem automatischen Konvergenzabgleich lassen sich also die konventionellen Lageregler der Farbfernsehkamera für die H- und V-Richtung durch digitale Signale ersetzen. Die für den atutomatischen Konvergenzabgleich ermittelten Werte für die Rasterdeckung können grundsätzlich sowohl in einem Analog- als auch in einem Digital-Speicher abgespeichert werden.

In der Praxis kann der Fall auftreten, daß die Bildvorlage bzw. Szene Bereiche aufweist, die ebenfalls niedrige Werte im Energieinhalt des Differenzsignals ergeben können. Damit der Konvergenzabgleich nicht bereits beim Auftreten eines ersten Nebenminimums erfolgt, wird erfindungsgemäß durch zweimaliges Durchlaufen des Abtastbereichs das Hauptminimum des Energieinhalts des Differenzsignals festgestellt und als Steuergröße herangezogen. Beim ersten Durchlauf wird das Hauptminimum ermittelt und beim zweiten Durchlauf dieser Wert dann wieder aufgesucht und der endgültige Abgleich vollzogen.

Das vorstehend im Zusammenhang mit einer horizontalen Rasterverschiebung beschriebene Verfahren bzw. die beschriebene elektronische Steuerschaltung zur Durchführung des Verfahrens kann in ganz entsprechender Weise auch für eine vertikale Rasterverschiebung verwendet werden.

**Patentansprüche**

1. Verfahren zum automatischen Konvergenzschnellabgleich für eine Farbfernsehkamera mit wenigstens zwei Farbkanälen (3, 4) und mit Steuerkreisen, welche die Verschiebströme der Raster zweier Farbkanäle (3, 4) gegenüber dem dritten Farbkanal-Raster als Bezugswert derart verändern, daß sich eine optimale Konvergenz in vertikaler und horizontaler Bildrichtung ergibt, wobei als Steuergröße das Hauptminimum des Energieinhalts der zugehörigen Farbdifferenzsignale bzw. hierzu erzeugter Differenzsignale (5), die durch Abtastung eines ausreichend großen Bereiches aus den jeweils zu vergleichenden Farbsignalen (3, 4) gebildet werden, herangezogen wird, dadurch gekennzeichnet, daß der Abtastbereich zweifach durchlaufen wird, wobei beim ersten Durchlauf das Hauptminimum ermittelt und beim zweiten Durchlauf dieser Wert wieder aufgesucht und der endgültige Abgleich vollzogen wird, und zwar in analoger Weise sowohl für die horizontale als auch für die vertikale Rasterverschiebung.

2. Verfahren nach Anspruch 1, dadurch gekennzeichnet, daß das Minimum der Signale auf einem Meßinstrument angezeigt wird.

3. Verfahren nach Anspruch 1, dadurch gekennzeichnet, daß das Minimum der Signale auf LED-Indikatoren angezeigt wird.

4. Verfahren nach Anspruch 1, gekennzeichnet, daß das Minimum der Signale auf einem Bildschirm eines Suchermonitors angezeigt wird.

5. Verfahren nach einem der Ansprüche 1 bis 4, dadurch gekennzeichnet, daß die ermittelten Werte für die Rasterdeckung zur Speicherung der Rasterlage über beliebig lange Zeit in einem Analog- oder Digital-Speicher abgespeichert werden.

**Claims**

1. A method for the automatic rapid convergence adjustment of a colour television camera having at least two colour channels (3, 4) and comprising control circuits which vary the deflection currents of the rasters of two colour channels (3, 4) with respect to the third colour channel raster in the capacity of a reference value, in sich a manner that an optimal convergence is produced in the vertical and horizontal directions of the picture, wherein the main minimum of the energy content of the associated colour difference signals or difference signals (5) generated additionally which are formed by scanning a sufficiently large region of the respective colour signals (3, 4) to be compared, is used, characterised in that, the scanning region is traversed twice, wherein the main minimum is detected during the first traverse and the said value is searched again during the second traverse and the final adjustment is completed and indeed in an analog manner both for the horizontal and for the vertical raster deflection.

2. A method according to claim 1, characterised in that, the minimum of the signals is indicated on a measuring instrument.

3. A method according to claim 1, characterised in that, the minimum of the signals is indicated on LED indicators.

4. A method according to claim 1, characterised in that, the minimum of the signals is indicated on an image screen of a view finder monitor.

5. A method according to one of claims 1 to 4, characterised in that, the detected values for the raster coincidence are stored for an optional length of time in an analog or digital store for storing the raster position.

## Revendications

1. Procédé pour le réglage rapide et automatique de la convergence dans une caméra de télévision en couleurs comprenant au moins deux canaux de couleur (3, 4) et un circuit de commande qui modifie les courants de déplacement des trames de deux canaux de couleur (3, 4) par rapport à la trame du troisième canal prise en tant que valeur de référence en vue d'obtenir une convergence optimale dans les directions horizontale et verticale de l'image, procédé au cours duquel on utilise comme grandeur de réglage le minimum principal du contenu en énergie soit des signaux de différence de couleurs correspondants soit des signaux de différence (5) engendrés à cet effet, qui sont formés par exploration d'un domaine suffisamment grand à partir des signaux (3, 4) à comparer respectifs, caractérisé en ce que le domaine d'exploration est parcouru deux fois, la première pour la production du minimum principal et la seconde pour une nouvelle recherche de cette valeur et pour un réglage approprié, cette opération étant exécutée de façon similaire aussi bien pour le déplacement de la trame horizontale que de la trame verticale.

2. Procédé suivant la revendication 1, caractérisé en ce que le minimum des signaux est affiché sur un appareil de mesure.

3. Procédé suivant la revendication 1, caractérisé en ce que le minimum des signaux est affiché à l'aide d'indicateurs à diodes électroluminescentes.

4. Procédé suivant la revendication 1, caractérisé en ce que le minimum des signaux est affiché sur l'écran d'un moniteur de viseur.

5. Procédé suivant l'une quelconque des revendications 1 à 4, caractérisé en ce que les valeurs fournies par la coincidence des trames sont stockées pendant un temps choisi librement pour la mémorisation de la position des trames dans une mémoire analogique ou numérique.

# FIG.1

# FIG.2

ABLENKUNG GRÜN — 1

ABLENKUNG ROT — 2

GRÜN SIGNAL — 3

ROT SIGNAL — 4

DIFFERENZ BILDUNG — 5

MINIMUM-KENNUNG — 6

VERSCHIEBESIGNAL-GENERATOR UND SPEICHER — 7

START — 8

STOP